Europäisches Patentamt

European Patent Office

Office européen des brevets

(19)

(11) Publication number: 0 183 501
A1

(12) EUROPEAN PATENT APPLICATION

(21) Application number: 85308530.6

(22) Date of filing: 25.11.85

(51) Int. Cl.⁴: C 22 B 23/04
C 22 B 3/00, C 01 G 53/00
B 01 D 17/04, B 01 D 11/04

(30) Priority: 26.11.84 US 674539

(43) Date of publication of application:
04.06.86 Bulletin 86/23

(84) Designated Contracting States:
AT BE CH DE FR GB IT LI LU NL SE

(71) Applicant: CALIFORNIA NICKEL CORPORATION
P.O. Box 1170
Crescent City California 95531(US)

(72) Inventor: Lowenhaupt, Harris
17440 Bluff Drive
Brookings Oregon 97415(US)

(72) Inventor: Hollenbeck, Melinda
1123 Ransom Avenue
Brookings Oregon 97415(US)

(74) Representative: Howden, Christopher Andrew et al,
FORRESTER & BOEHMERT Widenmayerstrasse 4/I
D-8000 München 22(DE)

(54) Improved separation extraction process for immiscible liquids.

(57) An improved solvent extraction process wherein a first solvent which contains a solute is mixed with a second solvent which is immiscible with the first so that the solute is extracted from the first solvent by the second solvent. In accordance with the invention, the separation of the first and second solvents is enhanced by subjecting the mixture to microwave radiation.

FIG. 1

## IMPROVED SEPARATION EXTRACTION PROCESS
## FOR IMMISCIBLE LIQUIDS

### BACKGROUND OF THE INVENTION

This invention generally relates to an improved extraction process and in particular is directed to an improved method of enhancing the phase separation of the two immiscible phases after such an extraction process.

Liquid-liquid extraction processes are employed in many industries to remove solutes from solvents. In the typical process, a first solvent containing a solute is brought into intimate contact with a second solvent in which the solute has a greater solubility to extract the solute from the first solvent. Subsequently the solute is separated from the second solvent by a suitable means such as distillation, precipitation and the like.

In liquid-liquid extraction processes two immiscible solvents are intimately mixed so that the mass transfer of the solute can be effected between the two solvents. The two solvents are selected to be mutually immiscible so that the separation of the two phases after the extraction process can be more easily accomplished. Preferably, such separation is effected by gravity due to the significant differences in densities usually existing between the two immiscible solvents. However, even if the two solvents are essentially immiscible and density differences significant, the separation still can take considerable time and frequently it is incomplete.

Generally, the more rapid the separation of the two immiscible solvents, the smaller the capacity needed for process settling equipment, and by reduc ing separation time, substantial decreases in capital expenditures can be made. Thus, the reasons for wanting to increase separation rates are obvious.

There are typically two stages in the separation process after the liquid-liquid extraction. In the first or primary stage the minor solvent rapidly coalesces into larger droplets within the continuous phase, the major solvent, and separated phase rapidly settles or rises depending upon the density difference between the minor and major solvents. After the first stage, a dilute concentration of very small droplets of the minor solvent in the major solvent very slowly settles or rises, as the case may be, depending upon the density differential between the two solvents.

The liquid-liquid extraction process is frequently used in the area of extractive metallurgy wherein a desired metal value is dissolved or leached from an ore by means of a highly acidic or caustic aqueous solution. Once the desired metal value is dissolved from the ore, it frequently becomes necessary to remove from the pregnant liquor which is formed by the leaching process other dissolved components, impurities and in some cases the desired metal value itself. These separations are frequently accomplished by liquid-liquid extraction processes.

For example, in the extraction of nickel values from low grade nickel bearing ore such as laterite by means of highly concentrated aqueous solutions of sulfuric acid, not only are nickel and cobalt extracted from such ore, but frequently iron and other impurities in large amounts are also extracted by the concentrated sulfuric acid. To remove the iron acid and other undesirable components from the highly acidic pregnant liquor, as described in copending applications Serial No. _____, filed _____, and Serial No. _____, filed _____, the acidic pregnant liquor is intimately mixed with an immiscible solution of long chain alkyl amines in an organic solvent such as kerosene or benzene. The primary alkyl amines very effectively extract iron and tertiary amines very effectively extract acid from the pregnant liquor. However, once the iron or acid is extracted from the pregnant liquor the natural separation of the two immiscible solvents by gravity has been found to be slow and thus requiring large processing equipment for such a settling process.

A wide variety of methods have been utilized in the past to accelerate or enhance the separation of immiscible fluids, particularly after a liquid-liquid extraction process. However, methods such as heating the components were not very successful when utilized in a process involving large volumes of highly acidic or highly caustic solutions which are frequently used in extractive metallurgical processes. The separation of the fluids by centrifuging usually involves equipment which is prohibitively expensive for the processes involved.

The need to accelerate the gravity separation of such highly acidic or highly caustic solutions is readily apparent because the equipment which is capable of handling the corrosive nature of such solutions is very expensive, therefore a substantial decrease in the time for the separation of the two immiscible solvents can result in substantial savings in capital expenses because of the smaller equipment required.

The present invention provides a simple, inexpensive method for accelerating the separation of two immiscible solvents, particularly those which have been utilized in a liquid-liquid extraction process, and, moreover, the process has widespread applicability to the extractive metallurgical and other industries.

## BRIEF DESCRIPTION OF THE INVENTION

This invention generally relates to a method of improving the separation of two immiscible solvents after such solvents have been mixed and particularly to an improvement in a liquid-liquid extraction process for separating two immiscible solvents which are intermixed so that the solute in one of the solvents can be extracted by the second solvent.

In accordance with the present invention, after the two immiscible solvents are intimately mixed to effect an extraction of a solute from one of the solvents by the other solvent, the mixture of immiscible solvents is subjected to microwave radiation to accelerate the gravity separation of the two phases. Generally, the mixture of solvents are subjected to a microwave energy at a frequency from about 2,000 to 30,000 MHz for a duration which is sufficient to effect the desired separation. Effective separation is usually not obtained until the temperature of the mixture is raised by at least $10^\circ C$. In many instances, the coalescence of the minor solvent in the major solvent is so rapid that the entire mixture of solvents need not be subjected to the microwave energy. Only the small interfacial area which contains the droplets of minor solvent in the major solvent need be treated. This can significantly reduce the size of microwave generation equipment required for such a separation.

The process of enhancing solvent separations of the present invention is particularly suitable for use in the metallurgical industries where large volumes of highly acidic or highly caustic solvents are employed in liquid-liquid extraction processes. Moreover, in many metallurgical processes, a relatively large amount of fine particulate matter is found in the solvent after the leaching process. During liquid-liquid extraction processes, these small particles tend to concentrate at the interface between the droplets of minor solvent and the major solvent which interfere with the coalescence of such droplets after the extraction process particularly when in a very small size. By subjecting such a mixture to microwave energy, the small droplets rapidly coalesce even if the interface between the two faces is loaded with fine particulate matter.

These and other features and advantages of the present invention will become apparent from the following detailed description taken in conjunction with the attached drawings.

## DESCRIPTION OF THE DRAWINGS

FIG. 1 is a schematic drawing of a separation unit embodying features of the present invention;

FIG. 2 is a flow diagram of a nickel leaching process wherein the pregnant liquor is subsequently treated by a liquid-liquid extraction process to remove iron; and

FIG. 3 is a flow diagram illustrating the utilization of the separation unit of the present invention in the iron extraction process shown in FIG. 2.

## DETAILED DESCRIPTION OF THE INVENTION

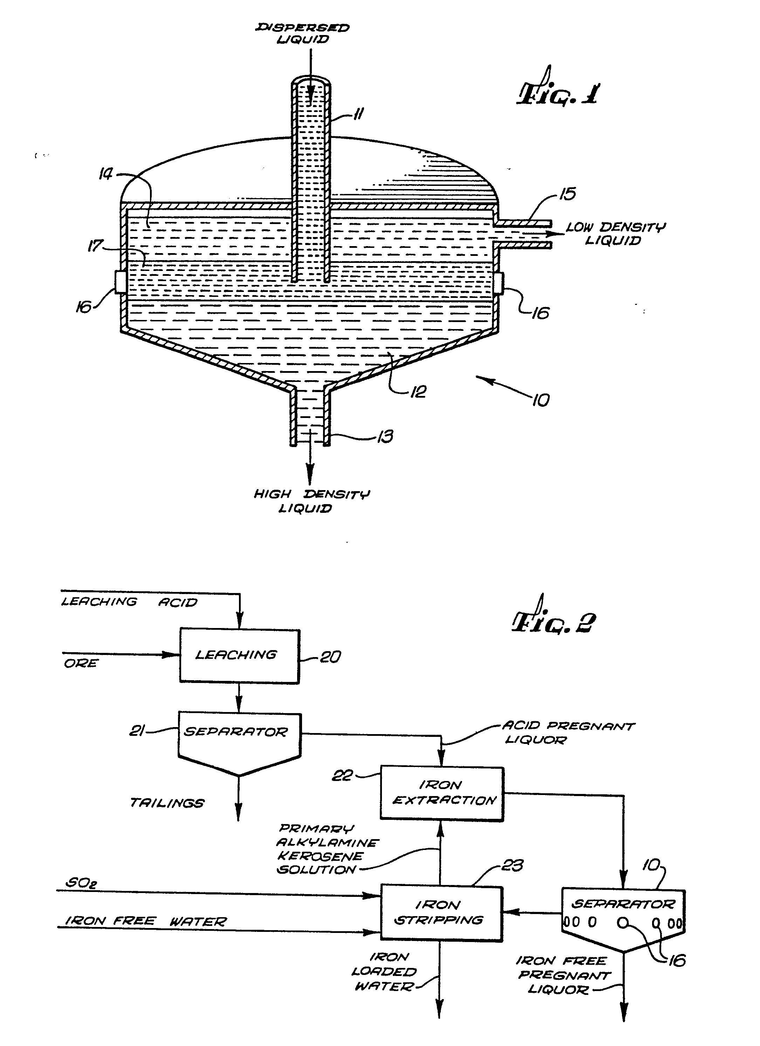

Reference is made to FIG. 1 which schematically illustrates a separation process which embodies features of the present invention. In accordance with this embodiment, a mixture of two immiscible fluids from a liquid-liquid extraction process is directed to a separator unit 10 by means of a conduit 11. The mixture is discharged in the central section of the separator unit 10 wherein the gravity separation of the two immiscible fluids begins. The liquid with the highest density 12 settles and is discharged through conduit 13. The liquid having the least density 14 rises and is discharged through conduit 15. Microwave transducers 16 are positioned around the periphery of the separator unit at the same level wherein the strata 17 of the unsettled mixture of immiscible liquids is located. The transducers 16, when activated provide microwave radiation to the mixture of the solvents to accelerate or enhance the separation thereof. Other means usually employed to help the separation such as baffles and the like can also be provided in the separator unit 10.

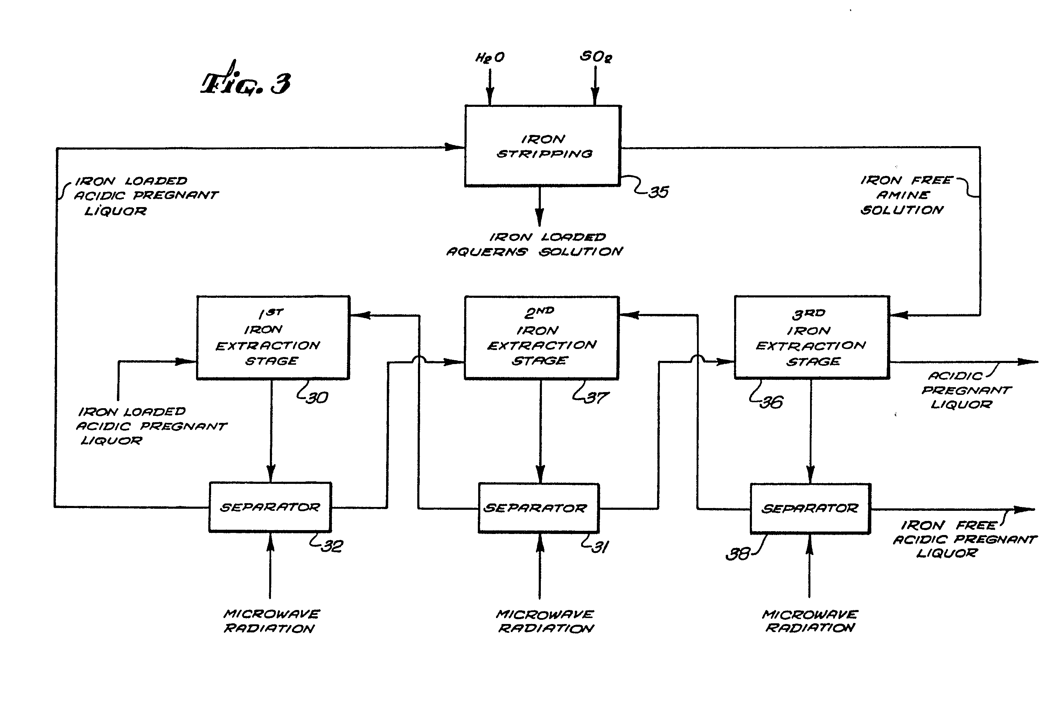

Reference is made to FIG. 2 which represents a block flow diagram of a nickel extraction process described in co-pending application Serial No. _____, filed on _____, in which the separation process of the invention finds application. In the process shown in FIG. 2, nickel bearing ore is fed to a leaching stage 20 wherein the ore is mixed with a highly concentrated, aqueous solution of sulfuric acid. The acid leaches nickel values and usually other impurities such as iron from the ore. The resulting acidified pregnant liquor discharged from the leaching stage 20 is separated from the tailings in separator 21 and then is passed to an iron extraction stage 22 wherein iron is extracted by a liquid-liquid extraction process from the acidic pregnant liquor. In this liquid-liquid extraction process, the aqueous based acidic pregnant liquor is mixed with an immiscible solution of long chain primary alkyl amines having about 6 to 22 atoms in the carbon chain in an organic solution such as kerosene or benzene. The primary alkyl amine dissolved in the organic solvent extracts iron from the acidic pregnant liquor.

After the extraction step at 22, the pregnant liquor and the organic solvents are separated in accordance with the invention by means of a separator unit 10 shown in FIG. 1.

However, to have an economical process, the immiscible solution of primary alkyl amines must be recycled back to the iron extraction step and before it can be recycled the iron must be stripped from the organic solution. This is accomplished by means of water and $SO_2$ in a second liquid-liquid extraction process identified as an iron stripping stage 23. In the stripping stage 33 the water is essentially immiscible in the organic solution and although not shown can also be effectively separated from the organic solution in accordance with the present invention before the organic solution is recycled the iron extraction step.

The extraction stage 22 and stripping stage 23 shown in FIG. 2 generally comprise multiple stages and thus the mixtures involved in each of the stages must be separated before passing the liquids to the other stages. FIG. 3 schematically illustrates an iron extraction process involving a multistage operation. The iron stripping stages would be essentially the same.

In the process shown in FIG. 3, iron loaded acidic pregnant liquor is fed to the first stage 30 wherein it is intimately mixed with an immiscible solution of primary alkyl amines in an organic solvent such as kerosene or benzene which is discharged from the separator stage 31. After intimate contact, the mixture of these two liquids are passed to a separator unit 32 wherein the mixture is subjected to microwave radiation to accelerate or enhance the separation of the two phases. The organic phase separated from the pregnant liquor in separator 32, which is loaded with iron, is passed to an iron stripping stage 35 to remove the iron therefrom by water and $SO_2$ and then is recycled to a third iron extraction stage 36.

Pregnant liquor from the separator unit 32 is passed to a second extraction stage 37 where it is intimately mixed with the immiscible solution of primary alkyl amines which is discharged from the third separator unit 38. After intimate contact, the mixture is directed to a second separator unit 31 where it is subjected to microwave radiation to accelerate or enhance the separation of the two phases.

The organic solution of primary amines from the second separator unit 31 is passed to the first iron extraction stage 30 and the pregnant liquor from separator 38 is directed to the third iron extraction stage 36.

The pregnant liquor from the separator unit 31 is intimately mixed in extraction stage 36 with the essentially iron free organic solution of primary alkyl amines which is discharged from the iron stripping stage 35. After intimate contact, the mixture is directed to the separator unit 38 wherein the mixture is subjected to microwave radiation to accelerate or enhance the separation of the phases.

The pregnant liquor discharged from the separator unit 38 is essentially iron free and can be further treated to remove acid or can be treated in a conventional fashion to recover nickel and cobalt values. The organic solution of primary amines discharged from separator unit 38 is passed to the second iron extraction stage 37.

The utilization of microwave energy in the separation of mixtures of solvents from liquid-liquid extraction processes in accordance with the invention greatly accelerates the gravity separation of the liquids and thus greatly reduces the size and capacity of equipment required for such separation processes. Moreover, because the separation with microwave assistance tends to be more complete than gravity separation itself, the extraction efficiencies greatly increase because the separate liquid components tend to have less contamination of the corresponding solvents and solutes.

The following examples are provided to further illustrate processes which embody features of the invention, but should not be taken as limiting the scope of the invention.

Example 1

An organic extractant phase was prepared comprising 20% (by volume) Alamine 308, a long chain primary alkyl amine consisting of 8 to 14 carbon atoms in the alkyl chains thereof, 10% (by volume) isodecanol and 70% (by volume) kerosene. An aqueous phase was prepared simulating a pregnant liquor from the leaching of low grade nickel bearing lateritic ores with highly concentrated sulfuric acid. The pregnant liquor contained about 400 grams per liter (gpl) $MgSO_4 \cdot 7H_2O$, 45 gpl $H_2SO_4$, 10 gpl Ni, 5 gpl Fe and 5 gpl Al as sulfates. The two immiscible solvents were intimately mixed and then subjected to microwave radiation of about 2500 MHz for 15 and 20 seconds which resulted in complete separations and temperatures of the resultant mixture of 30 and 40°C, respectively. The same solution was mixed at temperatures of 30° and 40°C and allowed to separate by gravity. The separation time for the mixture at a temperature of 30°C was 90 seconds, whereas the separation time for the mixture at a temperature of 40°C was 60 seconds. In comparing the respective separation times between the mixtures separated strictly by gravity and the mixtures in which the gravity separation was enhanced by microwave, it is evident that an almost six-fold and four-fold respective increase in the separation rates of the two phases were obtained by the use of microwave energy. The actual separation times with microwave energy was in fact shorter than the 15 and 20 seconds used for comparison purposes because the separation with microwave radiation was complete before the radiation treatments were finished. In the above tests, the point of complete separation determined visually and the criterion used for completion was no visible droplets of one phase in the other and essentially no visible fog or haze in the aqueous phase, i.e., a clean line of demarcation at the interface between the two phases.

Example 2

In another series of tests several different primary alkyl amines were mixed with a decyl alcohol and kerosene in volumetric percentages of 20%, 10% and 70% respectively to form an organic phase which was intimately mixed at various volumetric ratios with an artificial pregnant liquor as described in Example 1. The mixed samples were first allowed to separate on their own. They were then remixed and subjected to microwave radiation until the phases separated.   The  separation times and final tempera-
tures are indicated below.

| Primary Alkyl Amine | Ratio Org/Aqueous Phase | Time to Separate w/o Micro- wave Sec | Time to Separate w/Micro- wave Sec | Final Temp. °C |
|---|---|---|---|---|
| Primene JMT | 2:1 | 103 | 30 | 63 |
|  | 1:1 | 78 | 30 | 62 |
|  | 1:2 | 75 | 30 | 48 |
| Primene 81-R | 2:1 | 255 | 50 | 81 |
|  | 1:1 | +720[1] | 50 | 89 |
|  | 1:2 | 90 | 20 | 39 |
| Cyanex 272 | 2:1 | 160 | 25 | 51 |
|  | 1:1 | 110 | 20 | 45 |
|  | 1:2 | 80 | 35 | 41 |
| Alamine 336 | 2:1 | +240[1] | +35[2] | 74 |
|  | 1:1 | +240[1] | 30 | 66 |
|  | 1:2 | +120[1] | 35 | 48 |

1.   Slight  aqueous  entrainment of aqueous phase
     into organic phase.
2.   Test   terminated   due   to  entrainment  of
     aqueous phase into organic phase.

Example 3

         Another  organic  phase was prepared containing  20% (by volume) of a primary alkyl amine (Alamine
336),  10% decyl alcohol and 70% kerosene.  The organic  phase  was  mixed with a synthetic pregnant liquor
as  described  in  Example  1  at  an  organic/aqueous
volume  ratio  of  1:2.  Both phases were at a temperature  of  about  20°C.  Several samples of the mixture
were  subjected  to  microwave radiation until separation  was  complete.  The final temperature was about 40°C. The samples were reshaken then again allowed to separate. A second group of mixture samples were heated to approximately 40°C by a water bath and then allowed to separate. The results which follow indicate the enhancement of separation by heat alone and heat along with microwave radiation.

| Sample | Final Temp °C | Sep. Time, Sec. | Sep. Time After Reshaking Sec. |
|---|---|---|---|
| Microwave | 39° | 35 | 55 |
| | 39° | 35 | 52 |
| | 43° | 35 | 42 |
| Waterbath | 40° | 47 | |
| | 42° | 55 | |

While the above embodiments are directed to separating dispersed liquid components tests have shown that emulsified liquid components can be similarly separated by the process of the invention. Moreover, although the above embodiment is directed to separating an organic phase from the liquid-liquid extraction of components from the pregnant liquor resulting from the leaching of nickel values from low grade nickel bearing lateritic ores by concentrated sulfuric acid, it is to be understood that the invention can be used in a wide variety of processes involving the separation of organic and inorganic liquid mixtures such as in other liquid-liquid extraction processes used in the metallurgical fields.

Moreover, modifications and improvements can be made to the invention described herein without departing from the inventive concepts thereof.

## CLAIMS

1. In a solvent extraction process wherein a first solvent containing a solute is mixed with a second immiscible solvent whereby the solute is extracted from the first solvent by the second solvent, the improvement comprising enhancing the separation of a mixture of the immiscible solutions by subjecting the mixture to microwave radiation.

2. The process of claim 1 wherein one of said solvents is an aqueous solvent and the other of said solvents is an organic solvent.

3. The process of claim 2 wherein the aqueous solvent is an acidic nickel leach liquor.

4. The process of claim 3 wherein the organic solvent is selected from the group consisting of kerosene and benzene.

5. The process of claim 3 wherein the acidic nickel leach liquor is the pregnant liquor resulting from the leaching of nickel values from lateritic nickel bearing ores with concentrated sulfuric acid.

6. The process of claim 1 wherein the mixture is subjected to microwave radiation to raise the temperature thereof at least $10^{\circ}C$.

7. The process of claim 3 wherein the leach liquor is a solution of sulfuric acid.

8.   The process of claim 4 wherein the organic solvent contains primary alkyl amines having from about 6 to 22 carbon atoms in the alkyl chains.

9.   In the process of recovering nickel values from low grade nickel ores wherein the ore is treated with a concentrated sulfuric acid solution to form an acidic pregnant liquor containing nickel values, the improvement comprising:

a.   intimately mixing the acidic pregnant liquor with an immiscible solvent whereby solutes in the acidic pregnant liquor is extracted therefrom by the immiscible solvent; and

b.   subjecting the mixture to microwave radiation to enhance the separation of the pregnant liquor from the immiscible solvent.

10.   The process of claim 9 wherein the temperature of the mixture is raised by at least $10^{\circ}$C.

11.   The process of claim 9 wherein the solvent is selected from the group consisting of kerosene and benzene.

12.   The process of claim 11 wherein the solvent contains a primary alkyl amine having from about 6 to 22 carbon atoms in the alkyl chain.

13.   A separator, for use in a solvent extraction process, comprising means for subjecting a mixture of immiscible solutions to microwave radiation in order to enhance the separation of such mixtures.

1/2

0183501

DISPERSED LIQUID

*Fig. 1*

LOW DENSITY LIQUID

HIGH DENSITY LIQUID

*Fig. 2*

LEACHING ACID

ORE → LEACHING — 20

21 — SEPARATOR

TAILINGS

ACID PREGNANT LIQUOR

22 — IRON EXTRACTION

PRIMARY ALKYLAMINE KEROSENE SOLUTION

SO2

IRON FREE WATER

IRON STRIPPING — 23

SEPARATOR — 10

IRON LOADED WATER

IRON FREE PREGNANT LIQUOR

Fig. 3

## DOCUMENTS CONSIDERED TO BE RELEVANT

| Category | Citation of document with indication, where appropriate, of relevant passages | Relevant to claim | CLASSIFICATION OF THE APPLICATION (Int Cl.4) |
|---|---|---|---|
| X | GB-A-2 117 370 (CONOCO INC.) * Claims; page 2 * | 1,2,6 | C 22 B 23/04 C 22 B 3/00 C 01 G 53/00 B 01 D 17/04 B 01 D 11/04 |
| Y | | 3-5,7-13 | |
| Y | GB-A-1 079 957 (THE INTERNATIONAL NICKEL CO. OF CANADA LTD.) * Whole document * | 3-5,7-13 | |
| A | CHEMICAL ABSTRACTS, vol. 93, 1980, page 539, no. 54995s, Columbus, Ohio, US; G.A. KARDASHEV et al.: "Experimental study of the separation of binary mixtures under ultrasonic and electromagnetic field action", & ELEKTRON. OBRAB. MATER. 1980, (2), 39-41 | | |
| A | GB-A-1 239 181 (BECHTEL INTERNATIONAL CORP.) | | |
| A | FR-A-2 477 181 (CATO RESEARCH CORP.) | | |
| A | FR-A- 701 733 (A.M. HERBSHAN) | | |

**TECHNICAL FIELDS SEARCHED (Int Cl 4)**

B 01 D
C 22 B

The present search report has been drawn up for all claims

| Place of search THE HAGUE | Date of completion of the search 15-01-1986 | Examiner JACOBS J.J.E.G. |
|---|---|---|